# EUROPEAN PATENT APPLICATION

(11) **EP 1 111 258 A1**
(43) Date of publication of application: **27.06.2001**
(21) Application number: 99926932.7
(22) Date of filing: 05.07.1999
(51) Int. Cl.: F16C 35/063

(54) **BEARING HAVING FIXING MECHANISM FOR FIXING ITS BEARING AND MECHANISM**

(30) Priority: 08.07.1998 JP 50341998 U
(71) Applicant: ASAHI SEIKO CO., LTD., Sakai-shi, Osaka 593-8324 (JP)
(72) Inventor: OKAMOTO, Masaki, Kawachinagano-shi, Osaka 586-0044 (JP)
(74) Representative: VOSSIUS & PARTNER
(86) International application number: JP9903617
(87) International publication number: WO0003150

(57) **Abstract**

A bearing having a fixing mechanism for fixing the bearing to a shaft in alignment with the shaft with the centerline of the bearing by a simple operation using a rather simple mechanism, wherein at least one end part of an inner ring (1) is extended in axial direction at a wall thickness of less than its thickness, a plurality of axial slits (3) are formed in an extension part (2), a fastening ring (5, 5a) having the fixing mechanism for fixing the bearing to the shaft (8) is press-fitted onto the extension part (2) so as to fix the bearing to the shaft inserted into the inner ring with the fastening ring, the inner surface part of the fastening ring which presses near the tip end (4) of the extension part (2) is formed smaller in diameter than that on the inner side of that inner surface part, and a portion near the tip end (4) of the extension part (2) is pressed by the small diameter part so as to reduce the widths of slits (3) in the extension part (2) in order to reduce the inner diameter of the extension part (2), whereby the inserted shaft (8) can be held fixedly by the extension part.

## Description

### Field of the Invention

This invention relates to bearings having a shaft clamping mechanism widely used in general machines and more particularly to bearings that permit easy alignment between axial centerline of the bearing and that of the shaft by simple fitting.

### Background of the Invention

Bearings are required to have high dimensional accuracies in order to prevent the generation of vibrations and noises in use and provide long service life to them. When shafts are fit in and fastened to inner races of bearings, the shafts are required to be free of bends and have high sectional roundness. Bearings and shafts are designed to satisfy such requirements.

Misalignment of inner race and shaft adversely affect the damping of vibrations and noises in use and the maintenance of long service life.

The internal surface of the inner races of bearings are polished with close accuracy to ensure good fit with shafts that is essential for the prevention of vibrations and noises in service and the maintenance of long service life. Press fitting has been the most frequently method used for fastening shafts into the inner races of bearings. Press fitting provides substantial alignment between the shaft and the inner race of a bearing.

However, press fitting is avoided with what are known as insert bearings inserted in the housings of bearing units of general machines into which shafts are inserted in, for example, cramped areas.

In such environments, some other fitting methods are used. One of such methods is known as the screw-fit method. In this method, one end of the inner race is extended axially and one or two tapped holes are provided in the extended part. One or two bolts to press the periphery of the shaft are screwed into the hole or holes, thereby pressing the shaft against a certain axial line on the inner surface of the inner race and integrally fastening together the inner race and shaft. Another method is known as the eccentric-ring method. In this method, a ring having an eccentric inner periphery whose diameter is slightly larger than the outside diameter of the shaft is put on the tip of the extended part of the inner race. Then, the ring is turned to press the shaft against a certain axial line on the inner surface of the inner race and integrally fasten together the inner race and shaft.

However, it is often difficult to align the bearing and shaft by the screw-fit and eccentric-ring methods popularly used for insert bearings.

Some shaft inserting and fastening methods to align the insert bearing and shaft are also disclosed. A typical example is the adapter method. In this method, an axial taper is provided on the inner side of the inner race of a bearing. Then, a cylinder having the same axial taper on the outer periphery thereof and axial slits is inserted in the inner race and then a shaft is inserted in the cylinder. The cylinder is then pulled into the inner race by narrowing down the slits by means of a screwdown mechanism provided at one end of the cylinder with a smaller outside diameter. However, this method that thus presses together the inner race, cylinder and shaft is not very popular as it requires a complex mechanism and operation.

A method called the SKWEZLOC method disclosed in the U.S. Patent No. 3,276,828 is also known. In this method, at least one end of the inner race of a bearing is axially extended and axial slits are provided in the extended part. The slits are narrowed down by means of a fastening ring having a screw-fastening mechanism and a width substantially equal to the length of the extended part and surrounding the extended part. The shaft is fastened by thus reducing the inside diameter of the extended part.

This method grips and fastens the shaft by a compressive force acting around the extended part that results from the shear strain produced uniformly all around the base of the extended part. However, it is necessary to loosen the screw-fastening mechanism before fitting in order to save the trouble of fitting the fastening part into the extended part. The use of this method is not widespread for the above reason and because of the need for large fastening force and the lack of reliability.

Another known method disclosed in the U.S. Patent No. 4,537,519 is an evolution from the SKWEZLOC method described earlier. This method forms a groove on the outer periphery of the extended part near the base thereof. Provision of the groove reduces the wall thickness near the base and, therefore, facilitates bending of said base part and fastening with the fastening ring. However, it increases the complexity of the machining process of the entire bearing.

As such, simpler methods to insert and fasten the shaft that permit exact alignment of the bearing and shaft even where press-fitting cannot be used, as in the use of insert bearings, have been sought.

The object of this invention is to provide a bearing having means to fasten a shaft in alignment with the centerline of the bearing by a simple operation using a relatively simple mechanism.

### Disclosure of the Invention

In order to achieve the above object, a bearing according to this invention comprises an inner race with at least one end of which having an extended part whose wall thickness is not greater than the thickness of said inner race and multiple axial slits and a fastening ring surrounding said extended part and having a fastening mechanism to fasten a shaft inserted in the inner race, the fastening ring having a tapered step on the inner periphery thereof whose end in contact with the tip of said extended part having a diameter smaller than that of the near-base part thereof and said smaller part being adapted to fasten the tip of said extended part.

The extended part provided at least at one end of the inner race may have an inside diameter that is equal to, larger than or smaller than the inside diameter of the inner race.

### Brief Description of the Drawings

Fig. 1 is an axial cross-sectional view of a bearing having a shaft-fastening mechanism according to this invention.

Fig. 2 is a front view as seen in the direction of arrows Aa and Ab in Fig. 1.

Fig. 3 is an axial cross-sectional view of another bearing having a shaft-fastening mechanism according to this invention.

Fig. 4 is an axial cross-sectional view showing the bearing in Fig. 3 having an extended part of a different shape.

Fig. 5 is an axial cross-sectional view of still another bearing having a shaft-fastening mechanism according to this invention.

Fig. 6 is an axial cross-sectional view of yet another bearing having a shaft-fastening mechanism according to this invention.

Fig. 7 is an axial cross-sectional view of another bearing having a shaft-fastening mechanism according to this invention.

Fig. 8 is a front view as seen in the direction of arrows Ba and Bb in Fig. 7.

### Description of the Preferred Embodiments

In a bearing according to this invention, at least one end of the inner race is axially extended. The extended part of the inner race thus provided has multiple axial slits and a fastening ring having a fastening mechanism is fitted thereon. The fastening ring fastens a shaft inserted in the inner race. The inner part of the fastening ring whose diameter is reduced by a tapered step presses the tip of the extend part, whereby each slit in the extended part is narrowed down to reduce the inner diameter of the extended part. Then, the extended part whose diameter is thus reduced grips and fastens the inserted shaft. The guidance thus provided by the tapered step facilitates the fitting of the fastening ring on the extended part of the inner race. The fastening ring having the tapered step is the essential provision in this invention that assures ease of fastening.

With the tip of the extended part having slits is pressed by the inside of the fastening ring whose diameter is reduced by the tapered step, the slits can be easily narrowed down under a relatively small load applied by a simple diameter-reducing mechanism. The bearing and shaft thus securely fastened in perfect alignment are conducive to preventing or inhibiting the generation of vibration and noise in use and lengthening the service life of the bearing.

The diameter-reducing mechanism that reduces the inside diameter of the extended part of the inner race by narrowing down the slits provided therein may comprise, for example, a C-shaped ring having a discontinuity provided by an axial slot. A fastening bolt to reduce the width of the slot when tightened is provided to connect the opposing ends of the C-shaped ring across the discontinuity.

The tapered step on the inside of the fastening ring according to this invention facilitates the fitting of the fastening ring on the extended part of the inner race. This feature eliminates the need for loosening the fastening mechanism by a large amount prior to fitting the fastening ring and, therefore, permits reducing the allowance for tightening.

This embodiment reduces the inside diameter of one end of the fastening ring (at the tip of the extended part of the inner ring) until it becomes smaller than the outside diameter of said extended part. Thus, the slits in the extended part are narrowed down under a pressure normal to the axis. With the effect of this diameter reduction transmitted to the tip of the extended part with higher priority, the inside diameter of that portion of the fastening ring which faces the tip of the extended part is made smaller than that of the near-base portion.

An integral fastening ring may also be used as a variation of the C-shaped ring. In this variation, provisions are made to screw together the base of the extended part and the fastening ring. A taper is provided on the inside of the fastening ring so that axial and normal components of force press the tip of the extended part when the fastening ring is moved (screwed) axially and the slits are narrowed down as the result.

Thus the tapered step makes the inside diameter of the part of the fastening ring that presses the tip of the extended part smaller than the inside diameter of at least the near-base part thereof. The part whose diameter is thus reduced presses the tip of the extended part with higher priority.

The inside diameter of the extended part of the inner race may be equal to, larger than or smaller than the inside diameter of the inner race proper.

In order to facilitate the reduction of the diameter under pressure and prevent the influence of the pressure from reaching the inner race proper, the wall thickness of the extended part is smaller than that of the inner race proper. Yet, the wall thickness of the extended part must be high enough to assure the gripping and fastening of the shaft in the inner race when the fastening ring is tightened near the tip thereof.

The extended part may be provided at both ends of the inner race as well so as to grip and fastening the shaft at two points thereof.

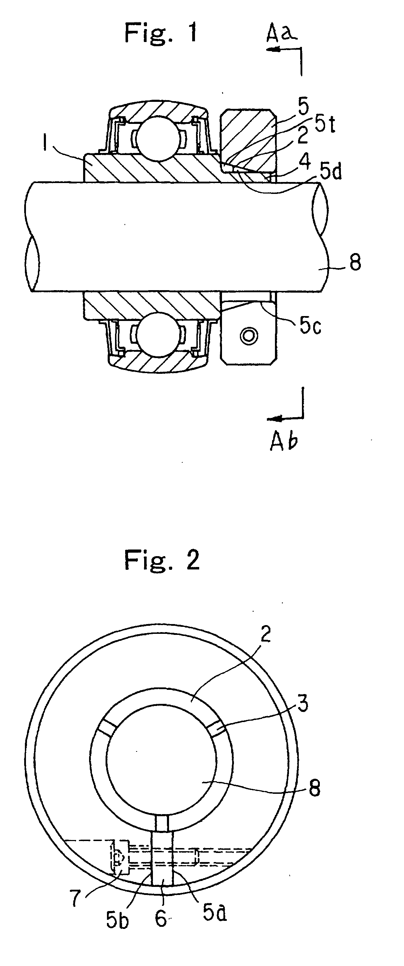

Now preferred embodiments of this invention will be described by reference to Figs. 1 to 8.

Figs. 1 and 2 show an embodiment that has an extended part 2 at one end of an inner race 1. The inside diameter of the extended part 2 is equal to that of the inner race 1. A slit 3 cut across the wall thickness runs substantially throughout the entire length of the extended part 2. In order to assure uniform distribution of the shaft gripping force, it is preferable to provide two or more slits at equal circumferential intervals.

A fastening ring 5 is fit over the extended part 2 so as to cover at least the tip 4 thereof.

The fastening ring 5 has a slot 6 that cuts a portion of the circumference thereof. A fastening bolt 7 is provided to narrow down the slot 6 by bringing together opposing ends 5a and 5b of the fastening ring 5.

The fastening ring 5 has a smaller-diameter portion 5c that is adapted to press only the opposing tip 4 of the extended part 2. A tapered step 5t is provided that makes the inside diameter of the portion 5c is smaller than that of the remaining portions closer to the inner race 1. Experientially, the angle 5d of the taper should preferably be not greater than 30 degrees .

The tapered step 5t on the inside of the fastening ring 5 shown in Fig. 1 has a flat smaller-diameter portion 5c at the end where the taper terminates. However, the shape of the smaller-diameter portion is not limited to the one just mentioned. The smaller-diameter portion may not be flat but constitute a continuation of the taper. Then, the smaller-diameter portion designates the terminal end of the taper that is in contact with the tip of the extended part 2. The tapered step of this invention is inclusive of such variations.

When the fastening bolt 7 is tightened from the condition shown in Figs. 1 and 2, the smaller-diameter portion 5c of the fastening ring 5 presses the tip 4 of the extended part 2 to narrow down the slits 3, whereby the extended part 2 grips and fastens the shaft 8 as a result of the reduction of the inside diameter thereof.

The allowance for tightening may be minimal because the difference between the outside diameter of the extended part 2 and the inside diameter of the smaller-diameter portion 5c of the fastening ring can normally be held below approximately 0.1 mm. The difference between the inside diameter of the inner race 1 or the inside diameter of the extended part 2 before tightening and the outside diameter of the shaft 8 is normally of the order of a few microns to a few tens of microns.

With all types of insert bearings in agreement with the ISO Standard tested by the inventor, the experience of the inventor indicates that the wall thickness of the extended part 2 is preferably 40 to 50 percent of the wall thickness of the inner race 1. The slit 3, which is generally of the order of a few millimeters, is easy to machine.

The extended part 2 need not be very long. Excessive length leads to waste of material and will adversely affect the rotating balance of the bearing. With the largest insert bearing among those in agreement with the ISO Standard mentioned above, the experience of the inventor indicates that the extended part 2 approximately 25 mm long suffices.

On the other hand, the fastening ring 5 should have a great enough width to provide a bolt 7 or other fastening device. The width of the fastening ring 5 should preferably be somewhat greater than the width of the extended part 2.

In order to transmit the fastening action to the tip 4 of the extended part 2, the inside diameter of the smaller-diameter portion 5c is reduced so that the fastening ring 5 comes into contact therewith only in the smaller-diameter portion 5c. Therefore, it suffices to make the width of the fastening ring 5 somewhat greater than the length of the extended part 2.

Because the tip 4 of the extended part 2 substantially grips and fastens the shaft 8 with a uniform force, the inside of the inner race 1 and extended part 2 of this invention need not be precision machined to close tolerances. The precision of polishing for the internal surface of the inner race 1 may thus be relaxed.

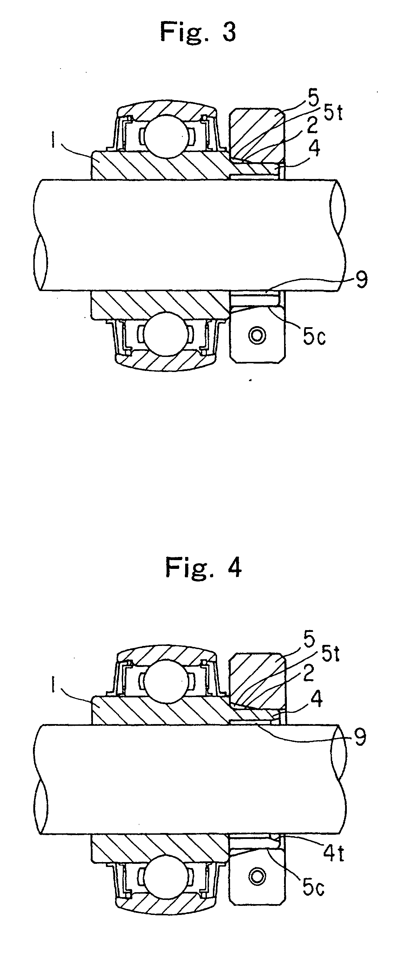

Figs. 3 and 4 show another embodiment of this invention in which the inside diameter of the extended part 2 is larger than that of the inner race 1 to leave an annular space 9 around the periphery of the shaft 8. When the fastening bolt 7 is tightened from the condition shown in Fig. 3 or 4, the smaller-diameter portion 5c provided by the tapered step 5t of the fastening ring 5 presses the tip 4 of the extended part 2 to reduce the inside diameter of the extended part 2 and grip and fasten the inserted shaft 8.

This embodiment has an advantage of simplifying the polishing operation because the internal surface of the extended part needs less precision.

A slight taper 4t to increase the inside diameter at the tip 4 of the extended part 2 may be provided so that the area of contact increases when the tip 4 of the extended part 2 presses the shaft 8.

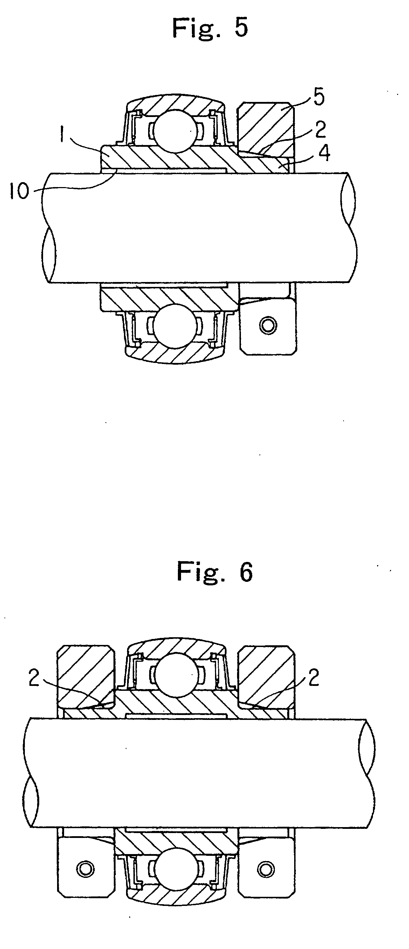

Fig. 5 shows an embodiment in which the inside diameter of the extended part 2 is made smaller than that of the inner race 1 to leave an annular space 10 between the inner surface of the inner race 1 and the periphery of the shaft 8, in contrast to the embodiment shown in Figs. 3 and 4. When the fastening bolt 7 is tightened from the condition of Fig. 5, the smaller-diameter portion of the tapered step on the fastening ring 5 presses the tip 4 of the extended part 2 to reduce the inside diameter of the extended part 2 and grip and fasten the inserted shaft 8.

This embodiment has an advantage of significantly simplifying or eliminating the inner race polishing operation to polish the internal surface of the inner race.

Fig. 6 shows an embodiment similar to the one shown in Fig. 5, except that extended parts 2 are provided at both ends of the inner race 1. The two extended parts 2 at both ends securely and stably grasp the shaft 8. The extended parts in the embodiments shown in Figs. 1 to 4 may also be provided at both ends, as in the embodiment shown in Fig. 6.

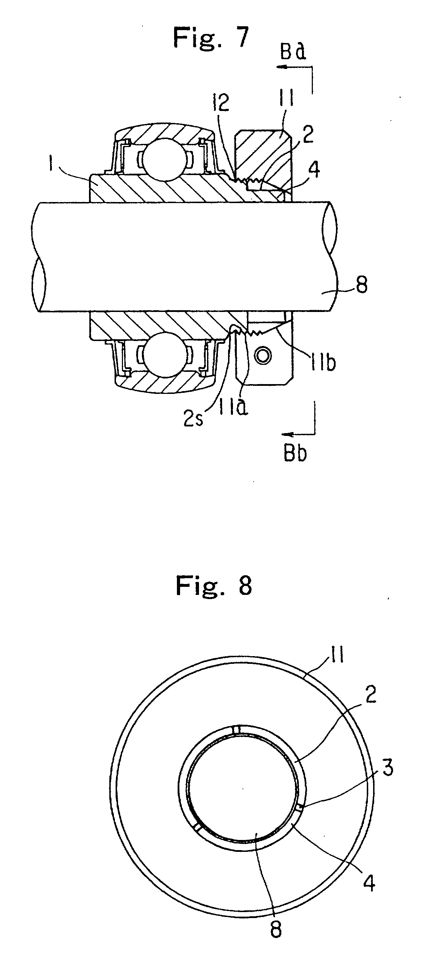

Figs. 7 and 8 show another embodiment of this invention that has a fastening ring 11 different from the fastening ring 5 shown in Figs. 1 to 6.

In this embodiment, an external thread 2s at the base of the extended part 2 and an internal thread 11a on the fastening ring 11 are engaged with each other. When the fastening ring 11 is screwed into the inner race 1, a tapered smaller-diameter portion 11b of the fastening ring 11 closer to the tip of the extended part 2 presses the tip 4 of the extended end 2, thereby narrowing down the slits 3 in the extended part 2.

In this embodiment, the extended part 2 can be provided to the inner race in the same manner as in the other embodiments described earlier, except that the fastening ring 11 is screwed onto the thread cut at the base 12 of the extended part 2.

As has been described, this invention is embodied in various forms. One embodiment has the inner race 1 and the extended part 2 of the same inside diameter (Fig. 1). Another embodiment has the extended part 2 whose inside diameter is greater than that of the inner race 1 (Figs. 3 and 4). Still another embodiment has the extended part 2 whose inside diameter is smaller than that of the inner race 1 (Fig. 5). Proper choice from these variations permit attaining stable results depending on the loads applied, number of rotations and other service conditions.

The internal taper on the fastening ring 5 has a significant advantage of facilitating the fitting of the fastening ring 5 into the extended part 2.

Provision of the two extended parts 2 and 2a at both ends of the inner race 1 increase the time and trouble to grip the shaft 8 but permits the shaft to be fastened in the inner race more securely. This provides greater stability in high-speed rotation and often permits cantilevering the shaft 8 with only one bearing.

### Feasibility of Industrial Use

As has been described, the bearings according to this invention permit easier fitting and fastening of shafts than the conventional ones. Uniform gripping prevents shafts from becoming damaged.

As the internal part of the fastening ring presses the tip of the extended part having slits, the bearing and shaft are securely fastened together in proper alignment under a relatively small force exerted by a simple diameter-reducing mechanism. All these features prevent (or inhibit) the generation of vibration and noise during service and lengthen the service life of bearings.

Because the tip of the extended part grips the shaft with uniform force, the inside surface of the inner race and extended part need not be precision machined to close tolerances. This feature permits relaxing the precision of polishing for the internal surface of the inner race.

## Claims

1. In a bearing adapted to fastening a shaft inserted in the inner race thereof comprising an inner race having an extended part having multiple axial slits and a wall thickness not greater than that of the inner race at least at one end thereof, said extended part having a fastening ring equipped with a fastening mechanism, the improvement which comprises a tapered step on the inner surface of said fastening ring that provides a smaller-diameter portion whose diameter is smaller than the near-base part thereof, the smaller-diameter portion being located close to the tip of said extended part and adapted to fasten the tip of the extended part.

2. The improvement according to claim 1, in which an extended part having an inside diameter equal to that of the inner race is provided at least at one end of the inner race.

3. The improvement according to claim 1, in which an extended part having an inside diameter greater than that of the inner race is provided at least at one end of the inner race.

4. The improvement according to claim 1, in which an extended part having an inside diameter smaller than that of the inner race is provided at least at one end of the inner race.
